# EUROPÄISCHE PATENTSCHRIFT

(11) **EP 2 147 736 B1**
(45) Veröffentlichungstag und Bekanntmachung des Hinweises auf die Patenterteilung: **20.06.2012**
(21) Anmeldenummer: 09013550.0
(22) Anmeldetag: 17.11.2006
(51) Int. Cl.: B23D 79/00

(54) **Vorrichtung zum thermischen Entgraten von Werkstücken**
Device for thermal deburring of workpieces
Dispositif d'ébavurage thermique de pièces usinées

(30) Priorität: 18.11.2005 DE 102005055498
(43) Veröffentlichungstag der Anmeldung: 27.01.2010
(62) Teilanmeldung aus: 06806718.0
(73) Patentinhaber: Extrude Hone GmbH, 42859 Remscheid (DE)
(72) Erfinder: Matt, Patrick, 87616 Marktoberdorf (DE); Kieser, Axel, 74379 Ingersheim (DE)
(74) Vertreter: Prinz & Partner

(56) Entgegenhaltungen:
- EP-A2- 0 087 505
- DE-A1- 10 210 738
- US-A- 4 486 173
- US-A- 4 819 917

## Beschreibung

Die vorliegende Erfindung betrifft eine Vorrichtung zum thermischen Entgraten von Werkstücken in einer Brennkammer mittels eines brennbaren Gasgemisches sowie ein Verfahren zu deren Betrieb.

Bei thermischen Entgratungsanlagen werden die zu entgratenden Werkstücke in einer Brennkammer untergebracht. Nach Verschließen der Brennkammer wird ein brennbares Gasgemisch eingeleitet, beispielsweise eine zündfähige Mischung aus Methangas und Sauerstoff. Die Vermischung der Gaskomponenten erfolgt üblicherweise in einem so genannten Mischblock, der der Brennkammer vorgelagert ist. Zur Einleitung des Gasgemisch dient ein Gaszuführkanal, der üblicher Weise unmittelbar in die Brennkammer mündet. Das Gasgemisch wird durch eine im Mischblock befindliche Zündkerze entzündet. Die Flammenfront schreitet von der Zündstelle im Zündkanal des Mischblocks über den Gaszuführkanal in die Brennkammer und entzündet das in ihm befindliche Gasgemisch. Der Vorgang läuft innerhalb weniger Millisekunden ab. Durch die frei werdende Wärme treten in der Brennkammer kurzzeitig Temperaturen von bis zu 3.500° C auf. Nach dem Zünden des Gasgemischs kommt es aufgrund einer isochoren Reaktion zu einem Druckanstieg in der Brennkammer, welcher von dem Beladedruck der Brennkammer und dem Energieinhalt des Gasgemisches abhängig ist. Dabei können kurz nach dem Zünden des Gasgemisches im Brennraum aufgrund der Explosion Drücke in der Größenordnung von bis zu 1.000 bar entstehen..Durch den resultierenden Hitzeschock, dem die Werkstücke dadurch ausgesetzt sind, werden insbesondere deren Ecken und Kanten abgetragen, da diese Stellen bei großer Oberfläche und kleinem Volumen besonders viel Wärme aufnehmen und somit oxidiert bzw. verbrannt werden. Beim thermischen Entgraten wird mittels der Qualität (z.B. das Mischungsverhältnis) und der Quantität (z.B. der Beladedruck) des Gasgemisch das zu erzielende Bearbeitungsergebnis hinsichtlich des Werkstücks beeinflusst. Auf diese Weise ist eine gründliche und wirtschaftliche Entgratung soleher Werkstücke möglich, ohne dass ein teures Spezialwerkzeug eingesetzt oder eine langwierige Nachbearbeitung von Hand vorgenommen werden muss.

Es ist bekannt, dass besonders gute und gleich bleibende Ergebnisse hinsichtlich des Entgratens nur realisiert werden können, wenn in der Brennkammer die richtige Zusammensetzung des brennbaren Gasgemisches mit einem vorbestimmten Beladedruck vorliegt. Dies führt dazu, dass zum Teil beachtliche technische Vorbereitungen unternommen werden müssen, um die Vorrichtung zum thermischen Entgraten für unterschiedliche Werkstücke vorzubereiten.

Allgemein weisen Vorrichtungen zur Behandlung eines Werkstücks unter einem hohen Druck (von beispielsweise über 200 bar) regelmäßig eine Bearbeitungskammer auf, die eine Art Glocke und einen Schließteller, der mit einem vorgegebenen Schließdruck eine Öffnung der Glocke verschließt, umfasst. Die Kammer ist mit einem Zuführkanal zur Zufuhr eines Fluides (Flüssigkeit, Gas, etc.) mit einem Beladedruck und der Schließkonstruktion verbunden. Der Schließteller wird während der Bearbeitung mit einem Schließzylinder gegen die Öffnung der Glocke gedrückt. Über die Schließ- bzw. Zuhaltekraft wird festgelegt, bei welchen Bedingungen die Kammer notfalls geöffnet wird, z.B. wenn eine Zerstörung des Druckbehälters durch zu hohe Beladedrücke bzw. den daraus resultierenden Explosionskräften und damit eine Gefährdung der Umwelt zu befürchten ist. Diese Zuhaltekraft wird bei vielen Anlagentypen konstant gehalten. Die Gegenkraft, die aus der Bearbeitung des Werkstücks resultiert, ist abhängig von dem Querschnitt der Kammer bzw. der Glocke, so dass gerade bei runden Formen der Kammer bzw. runden Öffnungen, die mit dem Schließteller verschlossen werden, vereinfacht auf deren Durchmesser abgestellt wird. Diese Gegenkraft ist quadratisch von dem Kammerdurchmesser abhängig, so dass mit größer werdendem Kammerdurchmesser der max. zulässigen Beladedruck sinkt. Das bedeutet mit Hinblick auf das thermischen Entgraten beispielsweise, dass Brennkammern mit einem großen Brennkammerdurchmesser regelmäßig ungeeignet sind, kleine Bohrungen an Werkstücken zu entgraten, da die hierfür erforderliche hohe Energie pro Einheitsquerschnittsfläche der Brennkammer nicht mehr erreicht werden kann. Bislang werden für derartige Behandlungen eines Werkstücks unter hohem Druck jeweils separate Vorrichtungen mit jeweils einen anderen Kammerdurchmesser und/oder eine andere Schließkonstruktionen eingesetzt. Der Oberbegriff von Anspruch 1 basiert auf der US 4 486 173.

Hiervon ausgehend ist es Aufgabe der vorliegenden Erfindung, eine Vorrichtung und ein Verfahren anzugeben, dass die mit Bezug auf den Stand der Technik geschilderten technischen Probleme zumindest teilweise lösen. Insbesondere sollen eine Vorrichtung und ein Verfahren angegeben werden, so dass der Betrieb einer Vorrichtung zum thermischen Entgraten mit hoher Flexibilität und Wirtschaftlichkeit möglich ist. Darüber hinaus soll auch ein sehr sicheres Verfahren zum Betrieb einer solchen Vorrichtung angegeben werden.

Diese Aufgaben werden gelöst mit einer Vorrichtung gemäß den Merkmalen des Patentanspruchs 1 sowie einem Verfahren zum Betreiben einer Vorrichtung zum thermischen Entgraten gemäß den Merkmalen des Patentanspruchs 8. Weitere vorteilhaft Ausgestaltungen sind in den jeweils abhängig formulierten Patentansprüchen angeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen.

Die Vorrichtung zum thermischen Entgraten von Werkstücken in einer Brennkammer mittels eines brennbaren Gasgemisches zeichnet sich dadurch aus, dass eine Apparatur zum Betrieb mehrerer Brennkammern mit einem unterschiedlichen Brennkammerdurchmesser und Mittel zur eindentigen Schliesskrafthegrensung des Schliesstelless in Abhängigkeit des Brennkammerdurchmessers vorgesehen sind.

Im Gegensatz zum Stand der Technik wir hier vorgeschlagen, eine Apparatur zum Betreiben mehrerer Brennkammern mit einem unterschiedlichen Brennkammerdurchmesser vorzusehen. Klarstellend sei hier darauf hingewiesen, dass der "Brennkammerdurchmesser" als Oberbegriff für eine Ausdehnung der für die Bearbeitung- und/oder Schließdrücke maßgeblichen Querschnittsfläche der Brennkammer anzusehen ist. Bevorzugt ist dabei die Ausgestaltung, bei der zumindest 2, insbesondere 3 oder sogar 4, Brennkammern mit unterschiedlichen Brennkammerdurchmesser betreibbar sind. Die Anzahl der Brennkammern kann beispielsweise unter Berücksichtigung der zu bearbeitenden Werkstücke und/oder der unterschiedlichen brennbaren Gasgemische ausgewählt werden. So wird beispielsweise die Flexibilität in der Weise erhöht, dass kleinere Brennkammern dann eingesetzt werden, wenn kleine Werkstücke mit hohem Beladedruck bearbeitet werden müssen, wie z.B. beim Entgraten kleiner Bohrungen am Werkstück. Die Bereitstellung einer Brennkammer mit kleinem Brennkammerdurchmesser hat zur Folge, dass weniger des brennbaren Gasgemischs benötigt wird, so dass nicht ein nur besseres Bearbeitungsergebnis erzielt wird, sondern gleichzeitig weniger Kosten im Hinblick auf das Entgratungsverfahren entstehen. Dahingegen kann auf eine andere Brennkammer mit einem größeren Brennkammerdurchmesser dann zurückgegriffen werden, wenn beispielsweise Grate an großvolumigen Druckgussteilen zu beseitigen sind oder die quantitive Ausnutzung der Anlage zur Reduzierung der Herstellkosten pro Werkstück gesteigert werden soll.

Beachtenswert in diesem Zusammenhang ist, das entsprechende Mittel zur Steuerung einer Zufuhr des Gasgemischs hin zu jeweils einer vorbestimmten Brennkammer vorgesehen sind. Diese Mittel gewährleisten eine redundante und verwechslungssichere Steuerung, so dass beispielsweise vorbestimmte Mengen bzw. Drücke des brennbaren Gasgemischs nur in die jeweils dafür geeignete Brennkammer zugeführt werden. Das bedeutet unter anderem, dass diese Mittel zur Steuerung in Abhängigkeit der zum Einsatz gelangenden Brennkammer eindeutig die zu verwendenden Bestandteile der Vorrichtung bzw. die Drücke des brennbaren Gasgemisches auswählt bzw. bereitstellt. Diese Mittel zur Steuerung einer Zufuhr des Gasgemisches umfassen insbesondere Sensoren, Ventile, elektronische Steuerungen, und/oder Notschalter.

Gemäß einer vorteilhaften Weiterbildung der Vorrichtung umfassen diese Mittel auch Identifikationsmittel zur eindeutigen Bestimmung der Brennkammern und Druckerzeugungsmittel zur Bereitstellung eines vorbestimmten Drucks des Gasgemisches in der vorbestimmten Brennkammer. Im Rahmen der Identifikationsmittel können beispielsweise Schalter zur Identifikation der Brennkammer, Sensoren, oder ähnliches vorhanden sein. Mit einem "vorbestimmten" Druck ist insbesondere ein von der vorbestimmten Brennkammer anhängiger "maximal zulässiger" Beladedruck gemeint, wobei bevorzugt diverse Beladedrücke bis hin zu diesem maximalen Beladedruck einstellbar sind.

Diese Identifikationsmittel wirken bevorzugt mit einem Teil der Brennkammer zusammen, beispielsweise mit deren Schließglocke, Schließteller, Schließzylinder oder dergleichen. Insbesondere können auch Mittel zur Erkennung der äußeren Gestalt bzw. von Erkennungsmitteln an den Brennkammern vorgesehen sein, die mit den Identifikationsmitteln zusammenwirken. Die mit den Identifikationsmitteln erhaltenen Informationen werden nun mit dem Betrieb der Druckerzeugungsmittel koordiniert, so dass beispielsweise die für die identifizierte Brennkammer vorgegebenen Bearbeitungsparameter eingestellt werden. Eine sichere, redundante Erkennung könnte z.B. sehr einfach über das Abfragen der Art der Dichtnut (z.B. deren Durchmesser) im Schließteller stattfinden. Diese könnte vor der eigentlichen Bearbeitung überprüft werden, wobei das redundante Signal den Identifikationsmitteln zugeführt wird, welche dann die Mittel zur Steuerung der Zufuhr des Gasgemisches gezielt beeinflussen. Speziell bei schon in Betrieb befindenden Anlagen kann dies eine kostengünstige Variante zur Nachrüstung darstellen.

Besonders vorteilhaft ist es, wenn die Vorrichtung eine Austauschanordnung für eine Mehrzahl von Brennkammern mit einem unterschiedlichen Brennkammerdurchmesser hat, die mit Identifikationsmitteln zur eindeutigen Bestimmung der Brennkammern zusammenwirkt. Eine solche Austauschanordnung ermöglicht, dass in etwa an derselben Stelle der Vorrichtung unterschiedliche Brennkammern positioniert werden können. Dabei kann der Austauschvorgang bevorzugt teil- oder sogar vollautomatisch durchgeführt werden. In diesem Zusammenhang wird zusätzlich auch vorgeschlagen, dass (beispielsweise bei einer vollautomatischen Austauschvorrichtung) die Informationen hinsichtlich der eingesetzten Brennkammer an die Identifikationsmittel weitergegeben werden.

Nach einer weiteren Ausgestaltung der Vorrichtung ist eine Dosiereinheit für die Komponenten des brennbaren Gasgemisches vorgesehen, welche in Abhängigkeit der vorbestimmten Brennkammer unterschiedliche Betriebszustände einnehmen kann. Das bedeutet insbesondere, dass die Dosiereinheit, die vorteilhafter Weise Teil der Druckerzeugungsmittel zur Bereitstellung des vorbestimmten Drucks des brennbaren Gasgemisches ist, eine bestimmte Anzahl von Modi hat, die in Abhängigkeit der identifizierten Brennkammer vorbestimmt sind. Damit ist gewährleistet, dass die identifizierte Brennkammer nur mit den hierfür geeigneten Beladedrücken betrieben wird. Des Weitem ist zu berücksichtigen, dass auf diese Weise ein einzelner Zündkanal bzw. ein einzelner Mischblock ausreichend ist, da die der Dosiereinheit nachgeordneten Bauteile bis hin zur Brennkammer unabhängig von der verwendeten Brennkammer benutzt werden können. Damit ist der technische Aufwand bei der Herstellung bzw. der Wartung deutlich reduziert.

Des Weiteren wird auch vorgeschlagen, dass die Dosiereinheit mit einer Hydraulikflüssigkeit betreibbar und die Hydraulikflüssigkeit in Abhängigkeit der vorbestimmten Brennkammer bereitstellbar ist. Das bedeutet beispielsweise, dass die Dosiereinheit eine Zylinder-Kolben-Einheit umfasst, wobei der Kolben über die Hydraulikflüssigkeit betrieben wird. Durch die unterschiedliche Bereitstellung der Hydraulikflüssigkeit können somit in der Dosiereinheit vorbestimmte Druckzustände, Verschiebewege und ähnliches redundant und verwechslungssicher eingestellt werden. Die hiermit portionierten bzw. mit Druck beaufschlagten Komponenten des brennbaren Gasgemisches werden also in der gewünschten quantitativen und qualitativen Zusammensetzung an den Mischblock bzw. schließlich die vorbestimmte Brennkammer weitergeleitet.

Demnach ist die Dosiereinheit mit einer Art indirekte Druckregelung versehen, d.h. dass über das Sicherheitsventil in der jeweiligen Hydraulik-Zuleitung der Dosiereinheit die Kraft begrenzt wird, mit welcher diese das Gas in den Brennraum einschiebt und so indirekt der max. möglichen Beladedruck des Brennraumes begrenzt wird. Das Einstellen des jeweiligen Arbeitsbereiches für die Werkstücke kann entweder automatisch über ein Bearbeitungsprogramm in der Steuerung oder manuell durch Verstellen der Hublänge des Dosierzylinders realisiert werden.

In diesem Zusammenhang ist es besonders vorteilhaft, dass die Hydraulikflüssigkeit über mehrere Zuleitungen mit je einem Wegeventil zu einer gemeinsamen Dosiereinheit zuführbar ist, und die Wegeventile so mit einem Identifikationsmittel zur eindeutigen Bestimmung der Brennkammern zusammenwirken, dass im Betrieb der Vorrichtung nur eine vorbestimmte Zuleitung offen ist. Das heißt mit anderen Worten auch, dass für jede zu betreibende Brennkammer eine Zuleitung für die Hydraulikflüssigkeit der gemeinsamen Dosiereinheit vorgesehen ist. Je nachdem, welche Brennkammer aktuell betrieben werden soll, wird genau eine dieser Zuleitungen der Hydraulikflüssigkeit aktiviert, während die anderen gesperrt werden. Dazu werden bevorzugt hydraulisch arbeitende Wegeventile eingesetzt, die jeweils einer Zuleitung zugeordnet sind. Diese Wegeventile werden in Abhängigkeit der von den Identifikationsmitteln gewonnenen Informationen redundant und verwechslungssicher geschaltet. Mittels dieser Wegeventile wird der Hydraulikstrom gesteuert, so dass damit der gewünschte Betriebszustand der gemeinsamen Dosiereinheit für die aktuell zu verwendende Brennkammer eingestellt wird.

Für den Fall, dass die Hydraulikflüssigkeit über mehrere Zuleitungen zu einer gemeinsamen Dosiereinheit zugeführt wird, ist es besonders vorteilhaft, wenn diese mehreren Zuleitungen jeweils ein separates Sicherheitsventil zur Ladedruckbegrenzung aufweisen. Damit wird die Sicherheit hinsichtlich des Betreibens der gemeinsamen Dosiereinheit und den verschiedenen Brennkammern weiter erhöht. Dabei ist jedes Sicherheitsventil an die Bedingungen in der jeweils gegebenen Zuleitung abgestimmt.

Einem weiteren Aspekt der Erfindung wird ein Verfahren gemäß Anspruch 8 vorgeschlagen.

Das erfindungsgemäße Verfahren findet besonders bevorzugt Anwendung auf einer Vorrichtung, wie sie hier erfindungsgemäß beschrieben ist.

Die Identifikation der Brennkammer kann automatisch beispielsweise mittels mechanischer Schalter, magnetischer, elektrischer oder optischer Sensoren oder Ähnlichem erfolgen. Dazu weisen die Brennkammern (Glocke, Schließteller, etc.) vorteilhafterweise ein eindeutiges Bestimmungsmerkmal auf, das von geeigneten Identifikationsmitteln redundant und verwechslungssicher bewertbar ist.

In Abhängigkeit der identifizierten Brennkammern werden nun vorteilhafterweise vollautomatisch die Betriebszustände der Dosiereinheit eingestellt. Das bedeutet insbesondere, dass genau die eine, jetzt zum Betrieb der Dosiereinheit einzusetzende, Hydraulik-Zuleitung frei geschaltet wird. Der Betriebszustand der Dosiereinheit ist insbesondere durch deren maximal zulässigen Beladedruck charakterisiert. Die Dosiereinheit ist somit in der Lage, in Abhängigkeit von der identifizierten Brennkammer einen Beladedruck bis hin zu dem jeweils zulässigen maximalen Beladedruck zur Verfugung zu stellen. Für den Fall, das die Dosiereinheit mit einem Kolbenzylinder ausgeführt ist, kann folglich über die Einstellung der Hublänge ein Gasgemisch mit dem gewünschten Beladedruck (der höchstens dem maximalen Beladedruck entspricht) bereitgestellt werden. Dieses Gasgemisch wird über den Mischblock in die Entgratungskammer bzw. Brennkammer eingeführt. Nach der erfolgten Dosierung werden die Zuführleitungen verschlossen. Die Zündung des Gasgemischs erfolgt beispielsweise durch eine im Zündkanal des Mischblocks angebrachte Zündkerze.

Während des Durchführens des thermischen Entgratens entsteht kurzzeitig Hitze (1800°C bis 3300°C) in der Brennkammer, der die darin lagernden Werkstücke ausgesetzt sind. Die Wärmeableitung im Werkstück erfolgt von außen nach innen. Ist ein Querschnitt am Werkstück, welcher eine sehr große Fläche bezogen auf sein Materialvolumen besitzt, nicht in der Lage, die anfallende Energie ins Bauteilinnere abzuleiten(zum Beispiel ein Grat), wird dieser Querschnitt auf die Zündtemperatur erhitzt und durch den Sauerstoff oxidiert.

Vorteilhaft ist das Verfahren insbesondere auch deshalb, weil beispielsweise in Abhängigkeit des einzusetzenden Werkstücks eine Auswahl der geeigneten Brennkammer aus einer Mehrzahl von verfügbaren Brennkammern vorgenommen werden kann. Dies erfolgt beispielsweise unter Berücksichtigung der für dieses Werkstück geeigneten Betriebsparameter der Brennkammer und/oder dem wirtschaftlichen Einsatz des brennbaren Gasgemisches.

Besonders vorteilhaft ist das Verfahren, wenn das brennbare Gasgemisch in Abhängigkeit der identifizierten Brennkammer mit einem vorgegebenen maximalen Beladedruck bereitgestellt wird. Damit ist insbesondere gemeint, dass bevorzugt jeweils das gleiche brennbare Gasgemisch zum Einsatz gelangt, jedoch mit einem auf die identifizierte Brennkammer angepassten maximalen Beladedruck.

Gemäß der Erfindung sind Mittel zur eindeutigen Schließkraftbegrenzung in Abhängigkeit der identifizierten Brennkammer mit dem entsprechenden Brennkammerdurchmesser vorgesehen. Das bietet z.B. den Vorteil, dass zwei Kraftzustände gleichzeitig geändert werden könnten, dass heißt, mit dem einen Identifikationssignal könnten der Betriebszustand der Dosiereinheit und ein entsprechender Betriebszustand der Schließanlage redundant eingestellt werden. Damit kann sicher gestellt werden, dass der Schließteller bei einer für die Brennkammer vorbestimmten maximalen Druckbelastung sicher öffnet.

Einem übergeordneten Aspekt der Erfindung zu Folge wird eine Vorrichtung zur Behandlung eines Werkstücks unter einem Druck von zumindest 200 bar vorgeschlagen, die eine Kammer mit einem Kammerdurchmesser aufweist, wobei die Kammer mit einem Zuführkanal zur Zufuhr eines Fluides mit einem Beladedruck und einem Schließteller, der mit einer Schließdruck eine Öffnung der Kammer verschließt, verbindbar ist, bei der eine Apparatur zum Betrieb mehrerer Kammern mit einem unterschiedlichem Kammerdurchmesser und Mittel zur Steuerung einer Zufuhr des Fluides hin zu jeweils einer vorbestimmten Kammer vorgesehen sind. Mögliche weitere Anwendungsgebiete für dieses besonders sichere Vorgehen beim Wechsel der Kammern sind dort vorteilhaft, wo unter Druck stehende Kammern mit einer kraftschlüssigen Schließvorrichtung ausgeführt sind, die sich z.B. im Gefahrenfall öffnen. Ein Beispiel könnte neben der Explosionsbearbeitung auch die Bearbeitung von Werkstücken mittels unter Druck stehenden abrasiven Medien sein. Bevorzugt ist eine solche Vorrichtung mit entsprechenden Merkmalen hinsichtlich der Ausführungen der Zuleitungen für die Hydraulikflüssigkeit, die Identifikationsmittel bzw. deren Eingriffsmöglichkeiten auf die jeweiligen Zuleitungen der Hydraulikflüssigkeit und/oder der Ausgestaltung der Dosiereinheit ausgeführt.

Im Hinblick auf die vorstehend beschriebene Vorrichtung können auch einfache, bei Anlagen zur fluidtechnischen Behandlung von Werkstücken übliche, Abwandlungen vorgenommen werden. So kann z.B. auf eine Kammer verzichtet werden, wenn das Werkstück bzw. Teile davon selbst den Druckraum begrenzen. Zum Beispiel können dann Öffnungen des Werkstücks mit einer Art Schliebteller verschlossen werden und über weitere Öffnungen das Fluid mit einem Beladedruck einleitbar sein. Auch in diesem Fall kann eine Beladedruck- und/oder Schließdruck-Begrenzung im Sinne der hier erfindungsgemäßen Art vorgenommen werden.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, die Erfindung jedoch nicht darauf begrenzt ist. Es zeigen schematisch:
- Fig. 1: eine Ausführungsvariante einer Vorrichtung zum thermischen Entgraten gemäß der vorliegenden Erfindung, und
- Fig. 2: eine Ausführungsvariante der Mittel zur Steuerung einer Zufuhr des Gas- gemischs.

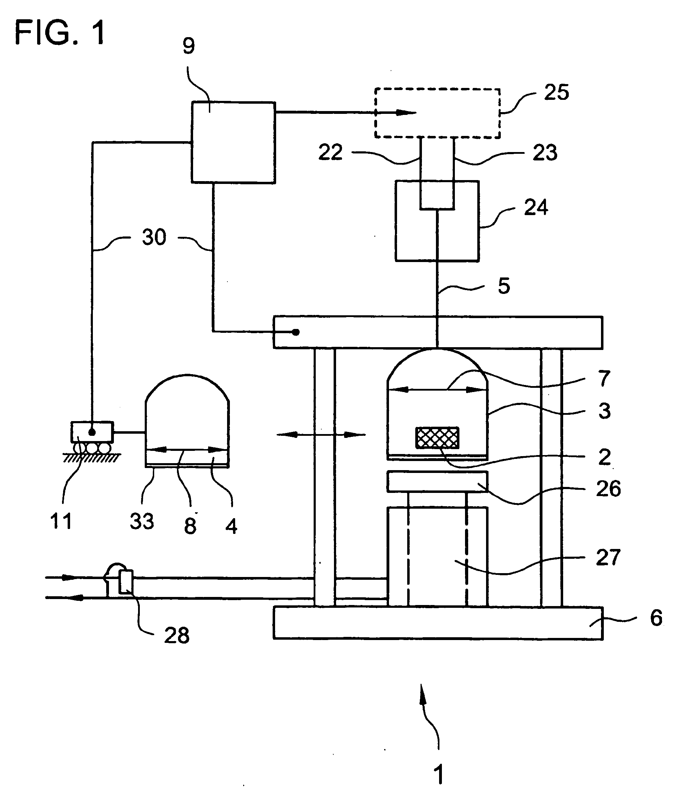

Fig. 1 veranschaulicht einen möglichen Aufbau für eine Vorrichtung 1 zum thermischen Entgraten von Werkstücken. Die Vorrichtung 1 umfasst eine Anordnung 6, in der eine erste Brennkammer 3 mit einem ersten Brennkammerdurchmesser 7 zusammen mit dem entsprechenden Schließteller 26 und dem Schließzylinder 27 positioniert ist. Der Schließteller 26 wirkt dabei mit einer entsprechenden Öffnung 33 der Brennkammer 3 bzw. der so genannten Glocke zusammen. Diese erste Brennkammer 3 mit dem entsprechenden ersten Brennkammerdurchmesser 7 ist für die Bearbeitung des im Inneren der ersten Brennkammer 3 dargestellten Werkstücks 2 besonders geeignet.

Zur Durchführung des Bearbeitungsvorgangs wird mittels der Steuereinheit 25 die Sauerstoffzufuhr 22 und die Brenngaszufuhr 23 aktiviert, so dass diese Komponenten des brennbaren Gasgemisches 5 über den Mischblock 24 in das Innere der ersten Brennkammer 3 zugeführt wird. Die während des Bearbeitungsvorgangs mittels des Schließtellers 26 verschlossene erste Brennkammer 3 enthält dann die gewünschte Qualität und Quantität des brennbaren Gasgemisches 5, das mittels einer im Mischblock 24 vorgesehenen Zündkerze (hier nicht dargestellt) gezündet wird. Das Verschließen der ersten Brennkammer 3 erfolgt über den Schließzylinder 27, der hydraulisch betrieben und mittels eines Ventils 28 gegen zu hohe Beladungsdrücke bzw. Explosionsdrücke gesichert ist.

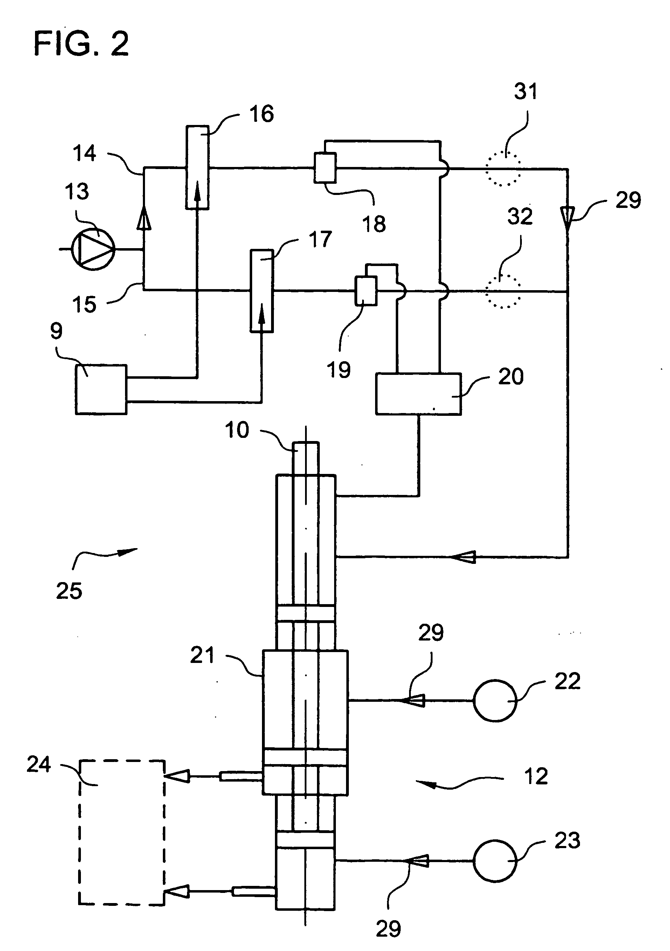

Für den Fall, dass in einem folgenden Bearbeitungsprozess ein anders gestaltetes Werkstück 2 thermisch entgratet werden soll, ist bei dieser Vorrichtung 1 zum thermischen Entgraten eine Austauschanordnung 11 vorgesehen, die einen Austausch der ersten Brennkammer 3 durch eine zweite Brennkammer 4 mit einem (von dem ersten Brennkammerdurchmesser 7 verschiedenen) zweiten Brennkammerdurchmesser 8 ermöglicht. Grundsätzlich sei angemerkt, dass diese Vorrichtung 1 mit weiteren Brennkammern und/oder Austauschanordnungen ausgeführt sein kann, wobei die Austauschanordnung auch gegebenenfalls manuell betrieben werden kann, da letztendlich auch Identifikationsmittel 9 zur Identifizierung der zum Einsatz gelangenden Brennkammer bereitgestellt sind. Zu dieser Identifikation sind die Identifikationsmittel 9 über Verbindungen 30 beispielsweise mit der Anordnung 6 oder der Austauschanordnung 11 verbunden. Die bei der Abfrage hinsichtlich der zu verwendenden Brennkammer gewonnenen Informationen werden schließlich an die Steuereinheit 25 weitergeleitet. Die Identifikation sollte bereits vor der eigentlichen Bearbeitung des Werkstücks stattfinden, damit die Taktzeit nicht erhöht wird. Deshalb ist es bevorzugt, dass die Identifikationsmittel mit einer der eigentlichen Bearbeitungsstation vorgelagerten Erkennungsstation zusammenwirkt, so dass die Dosiereinheit bereits präpariert werden kann, wenn die Brennkammern noch ausgetauscht werden. Ein möglicher Aufbau dieser Steuereinheit wird in Fig. 2 veranschaulicht.

Im Hinblick auf den Einsatz mehrerer Brennkammern mittels der einen Vorrichtung sind Brennkammern mit folgenden Brennkammerdurchmessem bevorzugt: 120 mm, 150 mm, 170 mm, 200 mm, 250 mm, 320 mm. Vorteilhafter Weise weist die Vorrichtung mindestens 2, 3 oder sogar 4 solcher Brennkammern auf. Bezüglich dieser Brennkammerdurchmesser lassen sich mittels einer entsprechenden Steuereinheit bzw. Dosiereinheit beispielsweise maximale Beladedrücke von ca. 16 bar, 23 bar, 25 bar und/oder sogar 40 bar erreichen.

Fig. 2 veranschaulicht nun eine besonders bevorzugte Ausführungsvariante der in Fig. 1 angedeuteten Steuereinheit 25, welche die Mittel zur Steuerung einer Zufuhr des Gasgemisches 5 hin zu der jeweils vorbestimmten Brennkammer umfasst.

Zunächst wird demnach von den Identifikationsmitteln 9 eine Information an ein erstes Wegeventil 16 oder ein zweites Wegeventil 17 geleitet, wobei diese Wegeventile Teil getrennter erster Zuleitungen 14 und zweiter Zuleitungen 15 für eine Hydraulikflüssigkeit 13 zum Betrieb einer gemeinsamen Dosiereinheit 12 für die Komponenten des brennbaren Gasgemisches sind. In Abhängigkeit der identifizierten Brennkammern werden demnach durch die Identifikationsmittel 9 entweder die erste Zuleitung 14 oder die zweite Zuleitung 15 geöffnet. Wie anhand der dargestellten Strömungsrichtungspfeile 29 zu erkennen ist, ist bei der hier gezeigten Ausführungsvariante nur die erste Zuleitung 14 geöffnet.

Die erste Zuleitung 14 hat demnach ein erstes Wegeventil 16 zur Bereitstellung eines gewünschten Drucks bzw. einer gewünschten Menge an Hydraulikflüssigkeit 13. Teil dieser ersten Zuleitung 14 ist zudem ein erstes Sicherheitsventil 18, welches eine Ladedruckbegrenzung hinsichtlich einer ersten Brennkammer 3 realisiert. Zusätzlich kann die erste Zuleitung 14 auch zusätzlich mit einem ersten Rückschlagventil 31 versehen sein.

Die zweite Zuleitung 15 ist im Wesentlichen gleich aufgebaut, umfasst also ein zweites Wegeventil 17 und ein zweites Sicherheitsventil 19 sowie ggf. ein zweites Rückschlagventil 32. Dabei sind die Bauteile in der zweiten Zuleitung 15 auf die Ladedruckbegrenzung bzw. den Brennkammerdurchmesser der zweiten Brennkammer 4 abgestimmt.

Selbstverständlich können weitere Zuleitungen in ähnlicher Weise vorgesehen sein, falls die Vorrichtung mit mehr als zwei Brennkammern betrieben wird. Diese Zuleitungen bzw. Sicherheitskreisläufe haben das Ziel , die maximal auftretenden Belastungen während des thermischen Entgratens zu begrenzen. Die permanente Bereitstellung dieser Sicherheitskreisläufe in Kombination mit einer redundanten Weiche für deren Aktivierung erlaubt ein schnelles und kostengünstiges Austauschen der Brennkammern. Damit ist die Vorrichtung sehr flexibel einsetzbar, wobei gleichzeitig ggf. vorliegende Sicherheitsbestimmungen stets eingehalten werden.

Nachdem die Hydraulikflüssigkeit 13 nun über die ersten Zuleitung 14 hier der gemeinsamen Dosiereinheit 12 zugeführt wird, die hier gleichzeitig Druckerzeugungsmittel 10 zur Bereitstellung eines vorbestimmten Drucks des brennbaren Gasgemisches 5 in der vorbestimmten Brennkammer ist, wird in einer vorbestimmten Weise die Dosierung der Sauerstoffzufuhr 22 und der Brenngaszufuhr 23 bewirkt. Die für den Entgratungsvorgang erforderlichen Portionen Sauerstoff und Brenngas werden mittels des veranschaulichten Gaszylinders 21 generiert und schließlich dem Mischblock 24 zugeführt. Von dort aus erfolgt die Einleitung des Gasgemischs in die bereitgestellte Brennkammer, so dass anschließend der Entgratungsvorgang eingeleitet werden kann.

Nahe liegende Abwandlungen z. B. hinsichtlich der Ausführungen der Zuleitungen für die Hydraulikflüssigkeit, die Identifikationsmittel bzw. deren Eingriffsmöglichkeiten auf die jeweiligen Zuleitungen der Hydraulikflüssigkeit, die Ausgestaltung der Dosiereinheit oder/und der Austauschanordnung 11 können ohne Weiteres vorgenommen werden.

## Patentansprüche

1. Vorrichtung (1) zum thermischen Entgraten von Werkstücken (2) in einer Brennkammer mittels eines brennbaren Gasgemischs (5), bei der eine Apparatur (6) mit mehreren Brennkammern (3, 4), Mittel zur Steuerung einer Zufuhr des Gasgemischs (5) hin zu jeweils einer vorbestimmten Brennkammern (3, 4), wobei jede Brennkammer (3, 4) eine Öffnung (33) aufweist, und ein Schliessteller (26), der mit der Öffnung (33) der vorbestimmten Brennkammer (3, 4) zusammen wirken kann vorgesehen sind, **dadurch gekennzeichnet, dass** die Brennkammern (3, 4) einen unterschiedlichen Brennkammerdurchmesser (7, 8) aufweisen und Mittel zur eindeutigen Schliesskraftbegrenzung des Schliesstellers (26) in Abhängigkeit des Brennkammerdurchmessers (7, 8) vorgesehen sind.

2. Vorrichtung (1) nach Patentanspruch 1, bei der die Mittel Identifikationsmittel (9) zur eindeutigen Bestimmung der Brennkammern und Druckerzeugungsmittel (10) zur Bereitstellung eines vorbestimmten Drucks des brennbaren Gasgemischs (5) in der vorbestimmten Brennkammer (3, 4) umfassen.

3. Vorrichtung (1) nach Patentanspruch 1 oder 2, bei der eine Austauschanordnung (11) für eine Mehrzahl von Brennkammern (3, 4) mit einem unterschiedlichen Brennkammerdurchmesser (7, 8) vorhanden ist, die mit Identifikationsmitteln (9) zur eindeutigen Bestimmung der Brennkammern zusammenwirkt.

4. Vorrichtung (1) nach einem der vorhergehenden Patentansprüche, bei der eine Dosiereinheit (12) für die Komponenten des brennbaren Gasgemischs (5) vorgesehen ist, welche in Abhängigkeit der vorbestimmten Brennkammer (3, 4) unterschiedliche Betriebszustände einnehmen kann.

5. Vorrichtung (1) nach Patentanspruch 4, bei der die Dosiereinheit (12) mit einer Hydraulikflüssigkeit (13) betreibbar und die Hydraulikflüssigkeit (13) in Abhängigkeit der vorbestimmten Brennkammer (3, 4) bereitstellbar ist.

6. Vorrichtung (1) nach Patentanspruch 5, bei der die Hydraulikflüssigkeit (13) über mehrere Zuleitungen (14, 15) mit je einem Wegeventil (16, 17) zu einer gemeinsamen Dosiereinheit (12) zuführbar ist, und die Wegeventile (16, 17) so mit einem Identifikationsmittel (9) zur eindeutigen Bestimmung der Brennkammern zusammenwirken, dass im Betrieb der Vorrichtung (1) nur eine vorbestimmte Zuleitung (14, 15) offen ist.

7. Vorrichtung (1) nach der Patentanspruch 5 oder 6, wobei die Hydraulikflüssigkeit (13) über mehrere Zuleitungen (14, 15) zu einer gemeinsamen Dosiereinheit (12) zuführbar ist, bei der die mehreren Zuleitungen (14, 15) jeweils ein separates Sicherheitsventil (18, 19) zur Ladedruckbegrenzung aufweisen.

8. Verfahren zum Betreiben einer Vorrichtung (1) zum thermischen Entgraten von Werkstücken (2) mittels eines brennbaren Gasgemisches (5) umfassend zumindest folgende Schritte:
- Identifikation einer Brennkammer aus einer Mehrzahl von Brennkammern (3, 4) mit jeweils einem vorgegebenen Brennkammerdurchmesser (7, 8),
- Einstellen eines Betriebszustandes einer Dosiereinheit (12) für das Gasgemisch (5) in Abhängigkeit der identifizieren Brennkammer,
- Einstellen eines Betriebszustandes einer Schliessanlage, nämlich einer Schliesskraft zwischen einem Schliessteller (26) und einer Öffnung (33) einer Brennkammer (3, 4), in Abhängigkeit der identifizierten Brennkammer (3, 4),
- Zuführen des Gasgemischs (5) hin zur Brennkammer (3, 4),
- Durchführen des thermischen Entgratens.

9. Verfahren nach Patentanspruch 8, bei dem das brennbare Gasgemisch (5) in Abhängigkeit der identifizierten Brennkammer (3, 4) mit einen vorgegebenen Beladedruck bereitgestellt wird.

## Claims

1. Device (1) for the thermal deburring of workpieces (2) in a combustion chamber by means of a combustible gas mixture (5), in which device an apparatus (6) having a plurality of combustion chambers (3, 4), means for controlling a supply of the gas mixture (5) forward to a respective predetermined combustion chamber (3, 4) are provided, each combustion chamber (3, 4) having an opening (33) and a closing plate (26), which can interact with the opening (33) of the predetermined combustion chamber (3, 4), **characterized in that** the combustion chambers (3, 4) have a different combustion chamber diameter (7, 8) and means are provided for clearly limiting the closing force of the closing plate (26) in dependence on the combustion chamber diameter (7, 8).

2. Device (1) according to Claim 1, in which the means comprise identification means (9) for clearly determining the combustion chambers and pressure-generating means (10) for providing a predetermined pressure of the combustible gas mixture (5) in the predetermined combustion chamber (3, 4).

3. Device (1) according to Claim 1 or 2, in which an exchange arrangement (11) for a plurality of combustion chambers (3, 4) of different combustion chamber diameter (7, 8) is present, which interacts with identification means (9) for clearly determining the combustion chambers.

4. Device (1) according to one of the preceding claims, in which a metering unit (12) for the components of the combustible gas mixture (5) is provided, which, in dependence on the predetermined combustion chamber (3, 4), can assume different operating states.

5. Device (1) according to Claim 4, in which the metering unit (12) can be operated with a hydraulic fluid (13) and the hydraulic fluid (13) can be provided in dependence on the predetermined combustion chamber (3, 4).

6. Device (1) according to Claim 5, in which the hydraulic fluid (13) can be fed via a plurality of supply lines (14, 15), each having a directional valve (16, 17), to a common metering unit (12), and the directional valves (16, 17) interact in such a way with an identification means (9) for clearly determining the combustion chambers that, during operation of the device (1), only one predetermined supply line (14, 15) is open.

7. Device (1) according to Claim 5 or 6, the hydraulic fluid (13) being able to be fed via a plurality of supply lines (14, 15) to a common metering unit (12), in which the plurality of supply lines (14, 15) respectively have a separate safety valve (18, 19) for limiting the charge pressure.

8. Method for operating a device (1) for the thermal deburring of workpieces (2) by means of a combustible gas mixture (5), comprising the following steps:
- identification of a combustion chamber from a plurality of combustion chambers (3, 4) respectively having a predefined combustion chamber diameter (7, 8),
- setting of an operating state of a metering unit (12) for the gas mixture (5) in dependence on the identified combustion chamber,
- setting of an operating state of a closing system, namely a closing force between a closing plate (26) and an opening (33) of a combustion chamber (3, 4) in dependence on the identified combustion chamber (3, 4),
- feeding of the gas mixture (5) forward to the combustion chamber (3, 4),
- performance of the thermal deburring.

9. Method according to Claim 8, in which the combustible gas mixture (5), in dependence on the identified combustion chamber (3, 4), is provided at a predefined charging pressure.

## Revendications

1. Dispositif (1) d'ébavurage thermique de pièces (2) dans une chambre de combustion au moyen d'un mélange de gaz combustible (5), dans lequel sont prévus un appareil (6) avec plusieurs chambres de combustion (3, 4), des moyens de commande d'une alimentation du mélange de gaz (5) à une chambre de combustion prédéterminée respective (3, 4),chaque chambre de combustion (3, 4) présentant une ouverture (33), et un actionneur de fermeture (26) qui peut coopérer avec l'ouverture (33) de la chambre de combustion prédéterminée (3, 4), **caractérisé en ce que** les chambres de combustion (3, 4) présentent un diamètre de chambre de combustion différent (7, 8) et des moyens pour limiter de manière univoque la force de fermeture de l'actionneur de fermeture (26) en fonction du diamètre de la chambre de combustion (7, 8).

2. Dispositif (1) selon la revendication 1, dans lequel les moyens incluent des moyens d'identification (9) pour la détermination univoque des chambres de combustion et des moyens de génération de pression (10) pour fournir une pression prédéterminée du mélange de gaz combustible (5) dans la chambre de combustion prédéterminée (3, 4).

3. Dispositif (1) selon la revendication 1 ou 2, dans lequel un agencement d'échange (11) pour une pluralité de chambres de combustion (3, 4) avec un diamètre de chambre de combustion différent (7, 8) est prévu, lequel coopère avec des moyens d'identification (9) pour la détermination univoque des chambres de combustion.

4. Dispositif (1) selon l'une quelconque des revendications précédentes, dans lequel une unité de dosage (12) est prévue pour les composants du mélange de gaz combustible (5), laquelle peut adopter différents états de fonctionnement en fonction de la chambre de combustion prédéterminée (3, 4).

5. Dispositif (1) selon la revendication 4, dans lequel l'unité de dosage (12) peut fonctionner avec un liquide hydraulique (13) et le liquide hydraulique (13) peut être fourni en fonction de la chambre de combustion prédéterminée (3, 4).

6. Dispositif (1) selon la revendication 5, dans lequel le liquide hydraulique (13) peut être acheminé par le biais de plusieurs conduites d'amenée (14, 15) ayant chacune une soupape à tiroir (16, 17) à une unité de dosage commune (12), et les soupapes à tiroir (16, 17) coopèrent avec un moyen d'identification (9) pour la détermination univoque des chambres de combustion de telle sorte que pendant le fonctionnement du dispositif (1), seulement une conduite d'amenée (14, 15) prédéterminée soit ouverte.

7. Dispositif (1) selon la revendication 5 ou 6, le liquide hydraulique (13) pouvant être acheminé par le biais de plusieurs conduites d'amenée (14, 15) à une unité de dosage commune (12), dans lequel dispositif les plusieurs conduites d'amenée (14, 15) présentent à chaque fois une soupape de sécurité séparée (18, 19) pour la limitation de la pression de charge.

8. Procédé pour faire fonctionner un dispositif (1) d'ébavurage thermique de pièces (2) au moyen d'un mélange de gaz combustible (5), comprenant au moins les étapes suivantes :
- identification d'une chambre de combustion à partir d'une pluralité de chambres de combustion (3, 4) avec un diamètre de chambre de combustion prédéterminé respectif (7, 8),
- ajustement d'un état de fonctionnement d'une unité de dosage (12) pour le mélange de gaz (5) en fonction de la chambre de combustion identifiée,
- ajustement d'un état de fonctionnement d'une installation de fermeture, à savoir d'une force de fermeture entre un actionneur de fermeture (26) et une ouverture (33) d'une chambre de combustion (3, 4), en fonction de la chambre de combustion identifiée (3, 4),
- acheminement du mélange de gaz (5) jusqu'à la chambre de combustion (3, 4),
- mise en oeuvre de l'ébavurage thermique.

9. Procédé selon la revendication 8, dans lequel le mélange de gaz combustible (5) est fourni avec une pression de charge prédéfinie en fonction de la chambre de combustion identifiée (3, 4).
